# EUROPÄISCHE PATENTSCHRIFT

(11) **EP 0 521 232 B1**
(45) Veröffentlichungstag und Bekanntmachung des Hinweises auf die Patenterteilung: **01.03.1995**
(21) Anmeldenummer: 91890129.9
(22) Anmeldetag: 25.06.1991
(51) Int. Cl.: F16L 23/08

(54) **Gliederkette für Rohrflanschverbindung**
Link chain for pipe flange connection
Chaîne à maillons pour un raccord à brides

(43) Veröffentlichungstag der Anmeldung: 07.01.1993
(73) Patentinhaber: Tschann, Edgar, A-6771 Bartholomäberg (AT)
(72) Erfinder: Tschann, Edgar, A-6771 Bartholomäberg (AT)
(74) Vertreter: Köhler-Pavlik, Johann, Dipl.-Ing.

(56) Entgegenhaltungen:
- DE-A- 3 000 504
- DE-U- 8 516 266
- FR-A- 1 073 967
- GB-A- 2 084 235
- US-A- 2 689 141
- US-A- 2 775 806
- US-A- 4 568 115
- US-A- 4 722 561
- McGraw-Hill Encyclopedia of Science & Technology, 1987, Seiten 313, 314

## Beschreibung

Die Erfindung betrifft eine Gliederkette nach dem Oberbegriff des Patentanspruches 1.

Gliederketten dieser Art sind durch die US-A-2 775 806 bekannt geworden. Bei dieser bekannten Gliederkette sind die endseitigen Kettenglieder durch einen als Spannhebel ausgebildeten Exzenter verbunden, welcher in einem der endseitigen Kettenglieder gelenkig gehalten und an einer Nase des anderen endseitigen Kettengliedes einhängbar ist. Dieser Exzenter hat den Nachteil, daß er seitlich absteht und Einbauprobleme beim Verlegen der Rohre in Bauwerke verursacht.

Dieses Problem wird durch die Maßnahme nach dem kennzeichnenden Teil des Patentanspruches 1 gelöst. Der erfindungsgemäße Exzenter ermöglicht eine weitgehende Verlegung des Verbindungs- bzw. Spannelementes in die Gliederkette, sodaß keine vorstehenden Bauteile vorhanden sind.

Eine vorteilhafte Weiterentwicklung bietet die Maßnahme nach Anspruch 2.

Einzelheiten werden anhand der Zeichnungen näher erläutert, in welcher ein Ausführungsbeispiel der Gliederkette dargestellt ist.

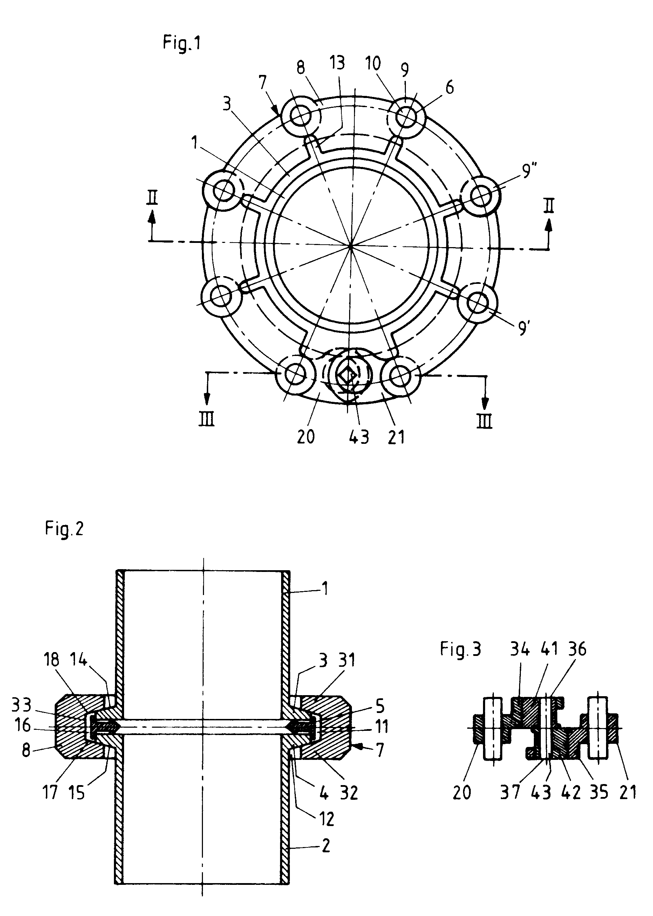

Es zeigen
- Fig. 1: eine Draufsicht der Gliederkette,
- Fig. 2: einen Schnitt nach der Lienie II-II der Fig. 1 und
- Fig. 3: einen Schnitt nach der Linie III-III der Fig. 1.

1 und 2 bezeichnen zwei Rohrleitungen, welche an ihren zusammenzufügenden Enden je einen Flansch 3 bzw. 4 aufweisen, zwischen denen sich eine Dichtung 5 befindet, welche beispielsweise eine Metalldichtung sein kann. Die beiden Rohrflansche 3, 4 besitzen schräge Außenflächen 14 bzw. 15, die nach außen zusammenlaufen. Zur Verbindung der beiden Rohrflansche 3, 4 dient eine Gliederkette 7 mit Kettengliedern 8, welche an ihren Enden unmittelbar gelenkig verbunden sind. Zu diesem Zwecke ist jedes Kettenglied 8 an beiden Enden mit je einer Ringöse 9 verbunden, wobei die Ringösen 9 bei zusammengesetzter Gliederkette 7 übereinander zu liegen kommen und durch einen, das Ösenloch 6 der beiden Ringösen 9 verbindendenden Kettenbolzen 10 verbunden sind. Zweckmäßig ist das Kettenglied 8 an seinem einen Ende mit zwei gabelförmig angeordneten Ringösen 9'' und an seinem anderen Ende mit einer einfachen Ringöse 9' versehen, welche zwischen der Gabel 7'' des benachbarten Kettengliedes zu liegen kommt. Die Kettenglieder 8 sind als Ringsegmente ausgebildet, deren Achse mit der Achse der Rohrleitungen 1 und 2 zusammenfällt. Die Kettenglieder 7 sind mit einer keilförmigen Öffnung 16 versehen, deren schräge Seitenflächen 17 und 18 einen Winkel einschließen, der im wesentlichen dem Winkel gleich ist, welchen die schrägen Flächen 14 und 15 der Flansche 3 und 4 einschließen, sodaß in der Gebrauchslage die Kettenglieder 7 mit ihren ebenen, ringsektorförmigen Flächen 17, 18 auf den ebenfalls ebenen Flächen 14, 15 satt aufliegen. An den Stoßstellen sind zwischen den beiden benachbarten Kettengliedern 8 im Anschluß an die Ringösen 9 Zwischenräume 13 vorgesehen, welche, wie später näher erläutert wird, eine Nachstellung bei Abnützung der Berührungs- bzw. Auflageflächen 14, 15 bzw. 17, 18 ermöglichen.

Selbstverständlich können im Rahmen der Erfindung auch andere konstruktive Lösungen zur Verbindung der Kettenglieder 8 vorgesehen sein. So besteht die Möglichkeit, anstelle der gabelförmigen Ringöse 9'' auch eine einfache Ringöse 9' zu verwenden, in welchem Falle die Ringösen 9 der Stoßstellen benachbarter Kettenglieder 8 übereinander zu liegen kommen.

Die beiden letzten Glieder der Gliederkette 7 sind als Abstützglieder 20, 21 ausgebildet. Diese sind an ihren einander zugekehrten Enden mit je einer ein kreisrundes Loch aufweisenden Öse 34 bzw. 35 versehen, in der eine zylindrische Scheibe 41 bzw. 42 mit einem exzentrisch gelegenen Loch 36 bzw. 37 gelagert ist. Die beiden Löcher 36 und 37 haben im Querschnitt ein Profil, im vorliegenden Falle sind sie quadratisch ausgebildet, und dienen zur Aufnahme eines Bolzens 43, durch dessen Verdrehen mit einem Werkzeug die Kette 7 gespannt oder gelockert wird. Nach Herausnahme des Bolzens 23 aus den Löchern 36 und 37 kann die Gliederkette 7 von den Flanschen 3, 4 abgenommen werden.

Durch die Vielzahl der Kettenglieder 8 mit ihren, sich über die gesamte Länge derselben erstreckenden Auflagefläche, ist ein nahezu geschlossener Auflagering gebildet, durch welchen eine optimale Dichtwirkung an beiden zu dichtenden Flanschflächen erzielt wird. Dadurch erfolgt nur eine relativ sehr geringe Abnützung der Dichtfläche, die durch einfaches Nachziehen des Exzenters ausgeglichen wird, sodaß jeweils die größte Dichtwirkung erzielt werden kann.

Der Bolzen 43 kann unter der Belastung einer nicht dargestellten Feder stehen, durch welche ein automatisches Nachstellen der Gliederkette 7 bei Abnützung der Anpreßflächen gesichert wird.

Die Nachstellbewegung ist mit einer Verringerung des Zwischenraumes 13 verbunden. Hiebei ist auch zwischen dem Boden 33 des von den Schenkeln 31, 32 der Kettenglieder 8 eingeschlossenen Raumes und den Flanschen 3 und 4 bzw. der Dichtung 5 der Rohrleitungen 1 und 2 ein Zwischenraum 11 und

zwischen den genannten Schenkeln 31 und 32 und den Rohrleitungen 1 bzw. 2 ein Zwischenraum 12 vorgesehen, der sich ebenfalls verringert.

Die erfindungsgemäße Gliederkette 7 ermöglicht auch die Anpassung derselben an verschiedene Rohrdurchmesser, was von der Tiefe bzw. Höhe der Zwischenräume 11, 12 und 13 abhängt.

## Patentansprüche

1. Gliederkette für Rohrflanschverbindungen mit schrägen Außenflächen der Rohrflansche, insbesondere von Rohren für die Anwendung von Vakuum oder zur Leitung von Hochdruckmedien, bei welcher aufeinanderfolgende, unmittelbar miteinander gelenkig verbundene Kettenglieder einstückig und mit einer im Querschnitt keilförmigen Öffnung ausgebildet sind, deren ringsegmentförmige Auflageflächen auf den Außenflächen der Rohrflansche flächig aufliegen, wobei die endseitigen Kettenglieder durch ein als Exzenter ausgebildetes Verbindungs- bzw. Spannelement verbunden sind, dadurch gekennzeichnet, daß der Exzenter zwei in je einem der beiden Kettenglieder (20A, 21A) drehbar gelagerte zylindrische Scheiben (41, 42) aufweist, die mit einem im Querschnitt profilierten, exzentrisch in der Scheibe gelegenen Loch (36, 37) versehen sind, wobei die beiden Scheiben (41, 42) mit einem durch einen deren Löcher (36, 37) durchsetzenden und dem Querschnitt der Löcher (36, 37) angepaßten Bolzen (43) gegeneinander verstellbar verbunden sind.

2. Gliederkette nach Anspruch 1, dadurch gekennzeichnet, daß das Verbindungs- bzw. Spannelement (22) mit einer Feder zum Nachstellen der Gliederkette (8) versehen ist.

## Claims

1. Link chain for pipe flange connections with chamferred outer surfaces of the pipe flanges, in particular for pipes for the application of vacuum of for conducting high pressure media, in which chain successive single-piece chain links and directly linked with each other in articulated manner have in cross-section wedge-shaped openings which rest on the outer surfaces of the pipe flanges with annular segmental contact surfaces, the end chain links being connected with each other by means of an eccenter as a connecting and tightening element, characterised in that the eccenter comprises two cylindrical disks (41, 42), each embedded rotatably in one of the two end chain links (20A, 21A) and each provided with an in cross-section profiled and eccentrically situated hole (36, 37), both disks (41, 42) being adjustably connected with each other by way of a pin (43) penetrating said holes (36, 37) and being adapted to their cross-section.

2. Link chain according to claim 1, characterised in that the connecting and tightening element (22) is provided with a spring for adjusting the link chain (8).

## Revendications

1. Chaîne à maillons pour un raccord de tuyau à brides dont les faces exterieures sont obliques, notamment pour des tuyaux utilisés pour conduire des médias à haute pression ou pour l'utilisation de vacuum, les maillons successives formés chacun d'une seule pièce et s'articulant entre eux présentent en coupe transversale une fissure en forme de coin dont les faces de contact formées en secteur d'anneau sont couchées sur les faces exterieures des brides, les maillons d'extrémité étant raccordés l'un avec l'autre par un élément de raccord et de serrage en forme d'excentrique, caractérisé en ce que l'excentrique comporte deux disques cylindriques (41, 42), chacune étant logées pivotablement dans un des maillons (20A, 21A) et présentant un trou (36, 37) sculpté et situé excentriquement, lesdites disques (41, 42) étant raccordées réglablement l'un par rapport à l'autre par un goujon (43) passant pour les trous (36, 37) des disques et adapté à la coupe transversale desdits trous.

2. Chaîne à maillons selon la revendication 1, caractérisé en ce que l'élément de raccord et de serrage (22) présente un ressort pour régler la chaîne.
